# EUROPEAN PATENT SPECIFICATION

(11) **EP 4 684 542 B1**
(45) Date of publication and mention of the grant of the patent: **01.07.2026**
(21) Application number: 24710794.9
(22) Date of filing: 15.03.2024
(51) Int. Cl.: H04W 4/021, H04W 4/029, H04W 4/33

(54) **RADIOFREQUENCY SENSING BASED MOTION DETERMINATION ARRANGEMENT**
AUF HOCHFREQUENZMESSUNG BASIERENDE BEWEGUNGSBESTIMMUNGSANORDNUNG
AGENCEMENT DE DÉTERMINATION DE MOUVEMENT BASÉ SUR UNE DÉTECTION DE RADIOFRÉQUENCE

(30) Priority: 22.03.2023 US 202363453787 P; 28.03.2023 EP 23164611
(43) Date of publication of application: 28.01.2026
(73) Proprietor: Signify Holding B.V., 5656 AE Eindhoven (NL)
(72) Inventor: DEIXLER, Peter, 5656 AE Eindhoven (NL); HAVERLAG, Marco, 5656 AE Eindhoven (NL); VAN DER HEIJDEN, Gerardus, Wilhelmus, Theodorus, 5656 AE Eindhoven (NL)
(74) Representative: Verweij, Petronella Daniëlle
(86) International application number: PCT/EP2024/057061
(87) International publication number: WO 2024/194213

(56) References cited:
- CN-U- 207 645 597
- US-A1- 2011 109 456

## Description

### FIELD OF THE INVENTION

The present invention is directed to a radiofrequency (RF) sensing based motion determination arrangement for determining motion data indicative of a direction of motion of a target ensemble of a subject and an object, to a method for controlling operation of a motion determination arrangement, to a use of a motion determination arrangement in a retail store and to a computer program.

### BACKGROUND OF THE INVENTION

Typically, retail footfall analytics employs video analytics for people counting and people localization, thus enabling retail stores operations executives to plan promotional campaigns and product placement strategies effectively. Footfall analytic sensing systems measure the number of people entering a store and is an important key performance indicator (KPI) for retailers to understand the consumer behavior through shopping patterns. For example, patterns such as the peak hour vs non-peak hours, correlation of sales of certain product categories when placed next to each other, window shopper's vs actual potential customers and so on. Also, the real-time analysis of the customers' flow through the store (Predictive Retail Footfall Analytics, abbreviated PRFA) provides many important actionable insights for retailers. The direction of movement of the shopper in the isle is of particular importance for the retailer for deciding on product placement locations.

In a typical system, physical sensors, e.g. based on PIR technology or cameras (e.g. security cameras) are used to measure how 'busy' it is on different locations in the store. This however means that a large number of these sensors must be positioned around the store, and the information from these sensors sent to a central computing device, which processes the 'traffic' data from each sensor and applies an algorithm (e.g. a machine learning algorithm) to generate a prediction of the future traffic at the checkout area of the store.

In the case of using PIR sensors for PRFA, this brings additional cost and installation effort (as, unlike for office applications, no PIR sensors are typically already present in the retail store). This makes a standalone footfall-sensing system relatively expensive. If instead of standalone battery-operated PIR sensors, the PIR sensors are co-located with some of the lights in the store, and these lights are already controlled by a wireless communication system, the system can be made less technically complex and expensive, but still requiring physical PIR sensor hardware will add cost to current retail luminaires. Please note that unlike for office applications, the PIR sensors in retail are not used for lighting control and hence do not pay themselves back via energy savings.

Document US 2022/0108617 A1 discloses systems and methods for locating movable objects such as shopping carts that do not require cameras or PIR sensors, and which can be used to determine the position of the object within a store. In some embodiments, a received signal strength indicator (RSSI) is used to assist in determining whether the cart is moving towards or away from a given location. However, the cart is provided with a navigation system that receives and/or provides information to transmitters/receivers, thereby resulting in higher production costs.

US 2011/109456 A1 discloses electronic article surveillance systems.

It would be therefore beneficial to reduce the complexity and production costs of current systems for determining motion of ensembles of objects and subjects.

### SUMMARY OF THE INVENTION

According to a first aspect of the present invention a radiofrequency (RF) sensing based motion determination arrangement is disclosed and referred to hereinafter as the motion determination arrangement. The motion determination arrangement is suitable for determining motion data indicative of a direction of motion of a target ensemble of a subject and an object.

The motion determination arrangement comprises at least one transmitter unit configured to provide a radiofrequency sensing signal and at least one receiver unit configured to receive the radiofrequency sensing signal. The motion determination arrangement also comprises a signal quality determination unit that is configured to determine a signal quality value of a signal parameter of the received radiofrequency sensing signal. The signal quality value is correlatable with a presence of the object and/or the subject within a sensing volume, such that a presence of the subject in the sensing volume results in a discernible signal quality value from that determined when the object is present in the sensing volume and from that determined when the target ensemble is present in the sensing volume. The motion determination arrangement also comprises a processing unit connected to the signal quality determination unit and configured to store the signal quality values determined during a time-span, and, using a time-series of the signal quality values, to determine the motion data.

Thus, in the motion determination arrangement of the first aspect of the invention, radiofrequency (RF) sensing signals are provided by the transmitter unit and received, after interaction with the environment, by the receiver unit. A respective sensing volume is associated to a pair of transmitter unit and receiver unit and defined as that volume in space within which changes significantly affect the received signal for a given transmitted radiofrequency signal. Changes refer in particular, but not in a limiting way, to an inclusion in, or removal from, the sensing volume of an object or subject. The receiver unit receives the RF sensing signals after interaction with the sensing volume and the signal quality determination unit is configured to determine a signal quality value of a predetermined signal parameter. The signal parameter is a parameter associated to the received signal whose value changes in dependence on whether a subject or an object is present or not in the sensing volume. In other words, the signal quality value is correlatable with a presence of the object and/or the subject in the sensing volume such that such presence or lack thereof can be inferred from the signal quality value, for instance through comparison with a reference value or expected value associated to a reference state of the sensing volume. Thus, when a subject is located in the sensing volume, the determined signal quality value is discernible from that obtained when an object is located in the sensing volume, both of which are in turn further discernible from that obtained when the whole ensemble is located in the sensing volume or part of the subject and part of the object are located in the sensing volume. The processing unit is signally connected to, i.e. in signal communication with, the signal quality determination unit. The processing unit stores the signal quality values determined during a time span and, using a time series of the signal quality data, determines the motion data that is indicative of a direction of motion of the ensemble within the sensing volume. Based on a distinct sequence of signal quality values associated to the object and/or to the subject, a direction of motion of the ensemble is distinguishable.

The motion data is derived from the signal quality values of the signal parameters of the RF-sensing signals provided over a wireless channel between two the transmitter unit and the receiver unit. Each RF sensing radio signal (e.g. a radio shot) is concurrently comprised of many different wireless multipaths between the transmitter unit and the receiver unit, some of which are direct path between the lights and some of which are indirect path (via an interaction with an object such as the floor). Unlike a laser beam breaker which is just a straight line, the detection zone, or sensing volume of RF-based sensing associated to the sensing pair (i.e. transmitter unit and receiver unit) is hence a 3D shape. For example, in an unobstructed environment the sensing volume has roughly the form of an American football. In practice, due to the wireless multipath nature of a built environment (e.g. a shopping isle with different products on the left and right side of the isle) and the antenna/luminaire construction, the American football shape will not be symmetric with respect to the vertical plane comprising the transmitter unit and the receiver unit. The time series evolvement of the signal quality values is analyzed, and the non-symmetry of the sensing volume with respect to the vertical plane spanned between the two radios (transmitter unit and receiver unit) is purposefully exploited to deduce the direction of motion of the target ensemble.

The motion determination arrangement of the first aspect of the invention is advantageously configured to determine the motion data of an ensemble without the need of dedicated PIR sensors, cameras or navigation system, for example including beacons/beacon receivers attached to the object or to the subject, thereby reducing the costs of the arrangement. This is thereby suitable for analyzing traffic flow, for example through aisles of retail shops, using a signal RF-sensing pair for detecting the direction of movement or motion.

In the following, embodiments of the motion determination arrangement of the first aspect of the invention will be described.

In an embodiment, the motion determination arranged is trained, during a commissioning phase, by running a set of trials where subjects and/or objects transverse the sensing volume in different predetermined directions and associating said directions to the resulting time series of signal quality values. During actual operation of the arrangement, the determined time series of signal quality values are compared to those obtained during the training to determine the motion data.

In an embodiment, the positions of the transmitter unit and of the receiver unit are selected and/or the antennas of the transmitter unit and of the receiver unit are engineered such that the resulting sensing volume has a sufficient degree of asymmetry for determining the motion data.

In an embodiment, reference sequences of signal quality values or ranges or variations of the values, each indicative of a respective direction of motion are also provided for comparing the time-series of the signal quality values and determining the motion data indicative of the motion direction of the ensemble.

Preferably, in an embodiment, the motion determination arrangement is integrated into a wirelessly controllable lighting arrangement. In this embodiment, the transmitter unit is integrated into a first device and the receiver unit is integrated into a second device. Preferably, the first and the second devices are lighting devices. Alternatively, the devices can be other devices associated to the wirelessly controllable lighting arrangement such as sensors, switches, etc. Preferably, the devices comprise both a transmitter unit and a receiver unit, or a transceiver unit operating both as a transmitter unit and a receiver unit. In a lighting arrangement with 3 or more devices including a transceiver device, each pair or devices may define a respective sensing volume and the signal quality determination device and the processing unit are configured to cooperate to determine motion data associated to each of the sensing volumes.

Suitable quality signal parameters include, but are not limited to, a received signal strength indication (RSSI) associated to the signal strength of the RF sensing signal received at the receiver unit, or a channel state information (CSI) indicative of the current channel properties of a communication link between the transmitter unit and the receiver unit, which describes how a signal propagates from the transmitter unit to the receiver unit and represents a combined effect of, for example, scattering, fading and power decay with distance.

The inventors recognize that an even cheaper PRFA system than a PIR based one can be built when the RF communication between multiple lighting devices is advantageously used to detect motion in the neighborhood of these luminaires.

In a preferred embodiment, the RF sensing signals are is based on Zigbee, but the RF sensing signals can be based on other network technologies, like Wifi, Thread, BLE mesh, or proprietary RF networks based on a star, tree or mesh network technology.

In an embodiment the transmitter unit is further configured to provide radiofrequency communication signals indicative of operation data or status data pertaining to the motion determination arrangement. Conversely, the receiver unit is configured to receive communication signals indicative of the operation data or status data. In a preferred embodiment, the RF sensing signals are based on Zigbee, but the RF sensing signals can be, in alternative embodiments, based on other network technologies, like WiFi, Thread, BLE mesh, or proprietary RF networks based on a star, tree or mesh network technology. The operation data may be indicative of operation instructions for controlling operation of the lighting devices, such as on/off instructions, dimming instructions, color instructions, etc. The status data can be indicative of a current operational status of the lighting device, including, for instance, current light intensity data or current light temperature of color data.

In another embodiment a current number or rate of radiofrequency sensing signals provided for determining the motion data depends on a current number or rate of radiofrequency communication signals required for operating by the motion determination arrangement or the lighting arrangement. Additionally or alternatively a current radiofrequency of the RF sensing signals and/or a directionality of the RF sensing signals depends on the radiofrequency and/or the directionality of the RF communication signals. In typical lighting arrangements, for example implementing a Zigbee communication protocol, and due to the fact that even partial overlap of Zigbee messages sent by different nodes can corrupt the sent message, in practice only 35-40% of the ZigBee network capacity can be used for the lighting control system. However, in other applications such as in retail applications (unlike in office applications), collision of packets is not per se a problem as in retail applications there is typically no low-latency lighting controls is required. Therefore, it is possible to go to higher values of RF sensing signals than normally allowed in a smart home or commercial office application. Thus, in an embodiment of the motion determination arrangement, the rate of RF sensing signal is increased such that some Zigbee packets will start to collide, making one or both packets corrupted. However, whenever real time control is required using the RF communication signals (e.g. during late evening hours in the grocery store certain aisles have the light switched off), the rate of RF sensing signals is reduced.

In another embodiment, wherein the radiofrequency sensing signals and the radiofrequency communication signals are provided in compliance with a respective wireless communication protocol. For instance, in a particular embodiment, the radiofrequency communication signals are provided using Zigbee, Thread, BLE and the radiofrequency sensing signals are provided using a WiFi communication protocol, preferably using a beam-steerable WiFi radio transmitter unit /receiver unit pair, as this enables excellent spatial confinement of the RF sensing signal.

In another embodiment, the transmitter unit is configured to provide first radiofrequency sensing signals according to a first wireless communication protocol. Further, the signal quality determination unit, upon determining a signal quality value indicative of the presence of the subject and/or the object within the sensing volume, is further configured to provide to the transmitter unit a detection signal indicative thereof. Then, upon reception of the detection signal, the transmitter unit is configured to provide second radiofrequency sensing signals according to a second wireless communication protocol. Advantageously, the second radiofrequency sensing signals provided in accordance with the second wireless communication protocol enable a higher correlation with the presence of the object and/or the subject than the first radiofrequency sensing signals provided in accordance with the first wireless communication protocol. For instance, an embodiment of the motion determination arrangement comprises a semi-concurrent dual radio is employed. Preferably, the motion determination arrangement comprises a low-cost WiFi+Thread dual radio, whereas Thread is used for communication and WiFi is only used for passive RF sensing. Optionally, also Thread is used for crude motion sensing such that if the Thread-based RF sensing detects major motion in the sensing volume, the WiFi-based sensing is activated for finer sensing with a better resolution or a higher correlation between the determined signal quality values and the presence or lack of presence of the subject, the object or the whole ensemble.

In a particular embodiment, the processing unit is configured, using the signal quality values, to determine subject data indicative of the subject within the sensing volume and/or object data indicative of the object, wherein the subject data and/or the object data enable a distinction between different subjects and/or objects. Identifying the subjects and/or objects allows for a distinction between different subjects and different objects. Further, in embodiments where the motion determination arrangement comprises more than one transmitter unit and/or receiver unit, i.e. in embodiments where more than one sensing volume is monitored by the RF-sensing signals, each by a respective pair of transmitter unit and receiver unit, the subject data and/or the user can be used to determine tracking data indicative of a route followed by the subject, the object, or the target ensemble as a whole.

For instance, the size, clothing, body fat content or any other suitable parameter of the subject including breathing rate, gait, walking speed, etc., can influence the sensing signal parameter in a known way and be used to determine subject data and identify a particular subject. Additionally, or alternatively, the nature of the object, such the material content, size, or any other suitable parameter of the object can influence the sensing signal parameter in a known way and be used to determine object data and identify a particular object. For instance, in a retail related application, as the user -subject- puts (additional) products into the cart -object-, the distortion of the shopping carts on the sensing signal parameter, e.g., RSSI/CSI, will increase. Additionally, the values of the signal quality parameter will also differ between product archetypes present inside the shopper's cart (metallic products vs organic products; large wireless absorption indicate a larger product with high water content like frozen food in the cart, whereas large reflections indicate metals or electronics). Hence, there are great differences in the RF sensing signatures of shopping carts based on their content (the RF sensing signature be determined based on the quantity, material type and the product outline of how the products are stacked up in the cart).

In a particular embodiment the variations of the signal quality values of the signal quality parameter are clustered by the processing unit, preferably using a suitably trained machine learning algorithm and thereby used to uniquely identify a first filled shopping cart of a first user vs. second filled shopping cart of a second user. This can be then used distinguish the motion trail of the first vs second user for example through the retail store.

In a further developed embodiment, the object data based on RF sensing fingerprint of object, e.g. the shopping cart, is assessed at moments when the subject is at least at a predetermined distance, e.g., 1 m distance, from the object (i.e. user temporarily has walked away from his cart). As the user pushes the cart through the store, wireless lighting node pairs compare at multiple locations in the store the distortions in the RF sensing wireless channel, which are caused by the shopping cart and its content.

In another embodiment, the radiofrequency sensing signal for determining the object data is provided using a WiFi transmitter unit is configured to provide the radiofrequency sensing signals at a plurality of different transmissions direction to map a surface of the detected cart. Preferably, the motion determination arrangement employs WiFi with beam steering. Alternatively, or additionally, the RF sensing data can be provided using a BLE communication protocol with angle of arrival detection for determining the object data. The beam steering and/or angle of arrival detection enables the processing unit to analyze the 2D absorption vs. reflection. For instance, due to the excellent confinement of the wireless signal, a 60GHz WiFi RF sensing system implemented by the motion determination arrangement can determine the outline of the loaded objects in the shopping cart with cm accuracy). This further enables the retail analytics system to trace the individual shopping carts (first user vs second user) through the store. In an extension, the user can be tracked through the store by associating the user data, resulting from a user-specific RF sensing fingerprint, to the user (alternatively or additionally to tracking the object, such as the shopping cart). This can be done based on the absorption caused by the user and/or biometrics such as breathing rate, heart rate or gait, walking speed, etc.

A second aspect of the present invention is formed by a use of a motion determination arrangement of the first aspect in a building, in particular in a store, retail store, factory, greenhouse, horticulture center, industrial manufacturing site, warehouse, or any other environment in which a subject carries an object thereby forming an ensemble, for determining the motion data indicative of a direction of motion of an ensemble, in particular in an aisle, and wherein the transmitter unit and the receiver unit are preferably arranged at a respective aisle of the building.

The inventors recognize that objects such as shopping carts are typically pushed by people (i.e., subjects), for example through the aisles of a retail store. The motion determination arrangement is therefore advantageously configured to utilize the time-series of the signal quality values determined by a pair of transmitter unit and receiver unit to distinguish the moving shopping cart from the associated human shopper. By merely analyzing the data from a single RF sensing pair, i.e., a pair formed by a transmitter unit and a receiver unit, for instance at the beginning of the aisle, the human body mass of the shopper looks distinctly different from the shopping cart, particularly when the direction of the RF sensing radio shot is chosen to be perpendicular to the aisle direction and a directional RF beam is used. This setup allows the motion determination arrangement to detect the shopping cart first and then only the human body mass. Based on this distinct detection sequence of cart & shopper, the direction of flow of the shopper (i.e. was this shopper walking into the aisle vs leaving the aisle) can be distinguished. Alternatively, the motion determination arrangement can be also implemented in buildings or other environments where the subject pulls the object. With this knowledge of the expected sequence of detection (object-subject when pushing, subject-object when pulling), the direction of motion can be determined.

Many retail stores use wireless communication not to all lighting fixtures in the store but only to the first fixture in each long trunk light (e.g. 15 meters long) arranged on each of the aisles. The first lighting fixture then communicates the lighting control commands to the other sister-lights in its trunk, for example via DALI wires.

While this hybrid wired and wireless lighting control setup makes the RF-based movement determination in such stores more difficult (due to the reduced number of RF sensing nodes), the disadvantage can be overcome by locating the transmitter unit and the receiver unit at the "bottle-neck" area of beginning and exit of a respective, preferably neighboring, aisle. Despite of only being able to collect signal quality values from sensing volumes covering those bottle-neck areas (eventually without sensing coverage elsewhere in the store), the motion determination arrangement used in such an environment nevertheless provides valuable information for a retail traffic flow analysis system in the form of movement data.

In the most simple configuration, with only one RF sensing pair available (with the first wireless luminaire with the transmitter unit or the first transceiver unit located at the beginning of a first trunk acting as the transmitter of RF sensing signals and the second wireless luminaire with the receiver unit or the second transceiver unit located at the beginning of a second trunk acting as the receiver of the RF sensing signals RX), having an outstanding RF sensing performance is key to determine how many people are entering/exiting the aisle. The first and second retail trunks run typically in parallel and spaced 2-3m apart.

Hence, to maximize the RF-based motion determination performance given the setup of a typical grocery store it is preferred to select for the sensing those wireless multipaths dominated by the shopping cart and minimize the influences from other objects/people nearby. This can be done by purposefully selecting a directional antenna for the Zigbee radio. More preferably, a beam-steerable WiFi radio transmitter unit /receiver unit pair is used, as this enables excellent spatial confinement of the RF sensing signal. In particular it is preferred that the WiFi RF sensing signal is slightly confined towards the interior of the aisle (i.e. away from the aisle intersections) to prevent false triggers from shoppers moving perpendicular to the to-be-monitored aisle.

In a further developed embodiment of use -in addition to using a first wireless fixture located at the beginning of the first aisle and a second wireless fixture located at the beginning of the second aisle- additional sensing pairs are created utilizing a third fixture - including a transceiver unit- which is located at the beginning of a third aisle. A beam steerable transmitter/receiver is selected such that the first and third luminaire can form a wireless multipath channel covering only the first aisle (i.e. the wireless multipath channel is chosen such that it is not triggered by human traffic in the second aisle). It should be noted that for CSI-based WiFi sensing signals the chosen wireless multipath may deliberately include also a floor reflection.

Optionally, several different beams of RF sensing signals with different spatial orientations with respect to the shopping cart may be simultaneously used (e.g. to create a side view and top view of the cart's content to better distinguish a first shopper's cart from a second shopper's cart).

In a further developed embodiment, when installing the lighting hardware with the transmitter unit / receiver unit or transceiver unit, a check board pattern is generated whereas for a first trunk, the transceiver unit (e.g., Zigbee radio) is on a first end section of the aisles (e.g., close to the cashier points), for a second trunk, the transceiver unit Zigbee radio is on a second end section of the aisles (e.g., close to the opposite end of the store), for a third trunk, the transceiver unit is again on the near-end of the store, and so on. During commissioning there is a purposefully selection of the subsets of wireless multipaths between luminaire located at a given end which are triggered by footfall in just one aisle.

In order to further improve the detection accuracy (given that RF-based motion determination can only be used at a few selected locations due the hybrid wired-wireless connectivity architecture of the lighting arrangements or systems used in the retail store), it is preferred to perform scans of the ensemble i.e. the user and the cart, from multiple angles. A first top view scan may use a first luminaire located, for instance, on the end of the top shelf lighting trunk on left of the aisle and a second luminaire located, for instance, on the end of the bottom shelf trunk on the right aisle. A second sideview scan can be done by another pair of luminaires whereby the third luminaire is located, for instance, on the right shelf lighting trunk (in shopping cart height) and a fourth luminaire is mounted, for instance, on the left shelf (again at shopping cart height). The locations mentioned above are not limitative and other locations resulting in different view angles are also possible.

**In** another embodiment, in addition to the wireless luminaires which are already mounted to maintain a wireless network for controlling operation of the lighting arrangement, the transmitter unit and/or the receiver unit can be integrated in other devices such as the electronic shelf price labels, which are equipped with "sleepy" solar-powered radios to get periodic updates on prices as well as wireless lighting inside freezer cabinets.

A third aspect of the present invention is formed by a method for controlling operation of a motion determination arrangement for determining motion data indicative of a direction of motion of a person using a cart, the method comprising:
- providing a radiofrequency sensing signal;
- determining a signal quality value of a signal parameter of the received radiofrequency sensing signal that is correlatable with a presence of an object and/or a subject within a sensing volume, such that a presence of the subject in the sensing volume results in a discernible signal quality value from that determined when the object is present in the sensing volume and from that determined when the target ensemble is present in the sensing volume; and
- storing the signal quality values determined during a time-span, and;
- determining the motion data using a time-series of the signal quality values.

The method of the third aspect shares the advantages of the motion determination arrangement of the first aspect of the invention and of any of its embodiments.

In the following, embodiments of the method of the first aspect will be described.

In a particular embodiment, the method further comprises providing radiofrequency communication signals indicative of operation or status data pertaining to the motion determination arrangement, wherein the radiofrequency sensing signals and the radiofrequency communication signals are provided in compliance with a respective wireless communication protocol.

In another embodiment, the method additionally comprises:
- providing first radiofrequency sensing signals according to a first wireless communication protocol,
- upon determining a signal quality value indicative of the presence of the subject and/or the object within the sensing volume, providing a detection signal indicative thereof; and
- upon reception of the detection signal, providing second radiofrequency sensing signals according to a second wireless communication protocol, wherein the second radiofrequency sensing signals provided in accordance with the second wireless communication protocol enable a higher correlation with the presence of the object and/or the subject than the first radiofrequency sensing signals provided in accordance with the first wireless communication protocol.

In yet another embodiment, the method further comprises determining, using the signal quality values, subject data indicative of the subject within the sensing volume and/or object data indicative of the object, wherein the subject data and/or the object data enable a distinction between different subjects and/or objects.

A fourth aspect of the present invention is formed by a computer program comprising instructions, which, when executed by a controller of a motion determination arrangement in accordance with the first aspect of the invention, cause the motion determination arrangement to carry out the method of the third aspect of the invention.

It shall be understood that the radiofrequency sensing based motion determination arrangement of claim **1,** the use of a motion determination arrangement of claim 10, the method for controlling operation of a motion determination arrangement of claim **11,** and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic block diagram of a radiofrequency sensing based motion determination arrangement in accordance with one embodiment of the invention,
Fig. 2 shows a schematic diagram illustrating the determination of motion data indicative of two different directions of motion in a non-symmetrical sensing volume,
Fig. 3 shows a schematic block diagram of a motion determination arrangement in accordance with another embodiment of the invention and implemented for use in a retail store for footfall analysis,
Fig. 4 shows a flow diagram of a method for controlling operation of a motion determination arrangement for determining motion data indicative of a direction of motion of a direction of motion of a target ensemble of a subject and an object in accordance with an embodiment of the invention, and
Fig. 5 shows a flow diagram of a method for controlling operation of a motion determination arrangement for determining motion data indicative of a direction of motion of a direction of motion of a target ensemble of a subject and an object in accordance with another embodiment of the invention.

### DETAILED DESCRIPTION OF EMBODIMENTS

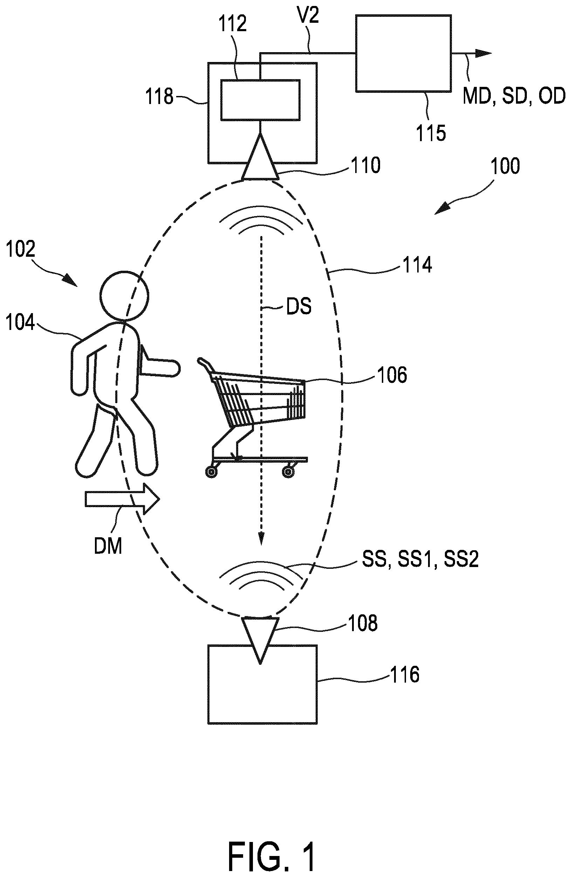

Fig. 1 shows a schematic block diagram of a radiofrequency sensing based motion determination arrangement 100 in accordance with one embodiment of the invention. The radiofrequency sensing based motion determination arrangement 100 is configured to determine motion data MD that is indicative of a direction of motion DM of a target ensemble 102 that is formed by a subject and an associated object. The subject, in this particular example, is a shopper 104 and the object is a shopping cart 106. The motion determination arrangement 100 comprises one transmitter unit 108 that is configured to provide a radiofrequency sensing signal SS using a suitable wireless communication protocol, such as, for instance, Zigbee, Threade, BLE, WiFi, etc.

The motion determination arrangement 100 of Fig. 1 also includes one receiver unit 110 that is configured to receive the radiofrequency sensing signal SS. A signal quality determination unit 112 is connected to the receiver unit 110 and configured to determine a signal quality value V of a signal parameter of the received radiofrequency sensing signal. The signal parameter can be for example a received signal strength indication (RSSI), or a channel state information (CSI) or any other suitable signal parameter whose value is correlatable with a presence of the object and/or the subject within a sensing volume 114. The sending volume 114 is defined as that volume in space within which changes significantly affect the received signal for a given radiofrequency signal. Changes refer in particular to an inclusion in, or removal from, the sensing volume of an object or subject. Thus, a presence of the subject 104 in the sensing volume 114 results in a discernible signal quality value V1 from that value V2 (shown in Fig. 1) determined when only the object 106 is present in the sensing volume and from that value V3 determined when the target ensemble 102 is present in the sensing volume 114.

A processing unit 115 is signally connected (e.g., via a wired or a wireless connection) to the signal quality determination unit 112 and is configured to store the signal quality values V determined during a time-span, and, using a time-series of the signal quality values, to determine the motion data MD indicative of the direction of motion DM of the ensemble 102.

In the example shown in Fig. 1, the transmitter unit 108 is integrated into a first device, in particular a first lighting device 116. Analogously, the receiver unit 110 is integrated into a second device, in particular a second lighting device 118. The transmitter unit 108 and the receiver unit 110 can also be configured as transceiver units with transmitting and receiving capabilities. Preferably, the lighting devices are part of a wirelessly controllable lighting arrangement that is controlled using radiofrequency communication signals in accordance with a suitable communication protocol than can be the same as, or differ from, the communication protocol used for providing the RF sensing signals. The radiofrequency communication signals are indicative of operation or status data pertaining to the motion determination arrangement or to the lighting arrangement.

In an exemplary motion determination arrangement, the transmitter unit 108 is configured to provide first radiofrequency sensing signals according to a first wireless communication protocol, for example Thread, Zigbee or BLS. The signal quality determination unit 112, upon determining a signal quality value V2 indicative of the presence of the subject 104 and/or the object 106 within the sensing volume 114, is further configured to provide to the transmitter unit 108 a detection signal DS indicative thereof. Consequently, upon reception of the detection signal DS, the transmitter unit 108 is configured to provide second radiofrequency sensing signals SS2 according to a second wireless communication protocol, for instance WiFi. The second radiofrequency sensing signals provided in accordance with the second wireless communication protocol (e.g. WiFi) enable a higher correlation with the presence of the object and/or the subject than the first radiofrequency sensing signals provided in accordance with the first wireless communication protocol, or in other words, a higher detection accuracy that distinguishes with a higher degree of certainty the object from the subject.

Optionally, the processing unit 115 is configured, using the signal quality values, to determine subject data SD indicative of the subject 104 within the sensing volume 114 and/or object data OD indicative of the object 106, wherein the subject data and/or the object data enable a distinction between different subjects and/or objects.

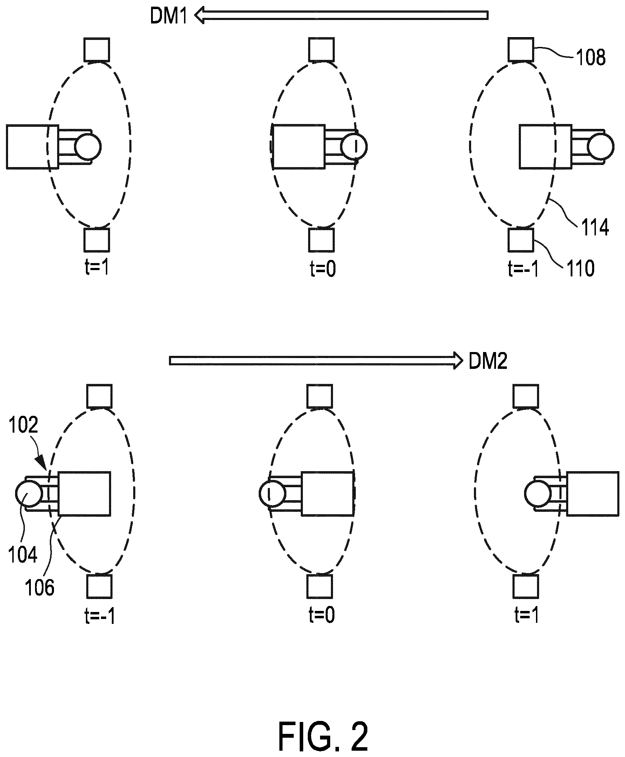

Fig. 2 shows a schematic diagram illustrating the determination of motion data indicative of two different directions of motion DM1 and DM2 in a non-symmetrical sensing volume. To deduce the direction of motion DM1 (first direction of motion) or DM2 (second direction of motion reverse to the first one) of the ensemble 102, the time series evolvement of the signal quality values is analyzed, where the non-symmetry of the sensing volume 114 with respect to the vertical plane spanned between the transmitter unit 108 and the receiver unit 110 is purposefully exploited. It is assumed from a bird's eye view that the shape of the sensing volume is "fatter" on the left half of the asymmetric sensing volume 114 and "skinnier" on the right half of the asymmetric sensing volume114. For this discussion, an arbitrary reference time, t=0, is defined as that point in time where a signal quality value determined is indicative of a maximum disturbance within the sensing volume (i.e. when both the shopping cart and the shopper are in the center of the detection zone, see Fig. 2, middle, top and bottom). If the shopper travels in the first direction of motion DM1 from the right to the left (see Fig. 2, top), a first time series of the signal quality value may be determined. In fact, if the shopper travels in the first direction of motion DM1 from the right to the left the signal quality value determined at a previous time, for example t=-1 seconds (see Fig. 2, top right), i.e., when the shopper is entering the sensing volume 114 via its "skinnier" half, is indicative of a relatively weak interaction of the ensemble 102 in the sensing volume 114, since the body of the shopper 104 and part of the cart 106 are still outside of the detection zone 114. However, the signal quality value determined at a later time, for example t=+1 seconds, (see Fig.2, top left), i.e., when the shopper is leaving the sensing volume 114 via its "fatter" half, is indicative of a relatively strong interaction of the ensemble 102 in the sensing volume 114 as both the body 104 and part of the cart 106 are within the RF sensing zone 114. The term "strong" refers to a comparison with the case at t=-1s. If the shopper travels in the opposite direction DM2 (see Fig. 2 bottom), thanks to the non-symmetry of the RF sensing zone 114 a different (second) time series of the signal quality value is determined as that obtained in the first direction of motion DM1. In fact, if the shopper travels in the direction from the left to the right, the signal quality value determined at t=-1 seconds (see Fig. 2, bottom left) is indicative of a relatively strong interaction of the ensemble 102 in the sensing volume 114, since only a part of the body of the shopper 104 is outside of the detection zone 114, in comparison to the situation depicted in Fig. 2, top right, in the case of the opposite direction of movement DM1. However, the signal quality value determined at t=+1 second (see Fig. 2, bottom right) is indicative of a relatively weak interaction of the ensemble 102 in the sensing volume 114 as only part of body 104 is located within the RF sensing zone 114, in comparison to the situation depicted in Fig. 2, top left, in the case of the opposite direction of movement DM1.The particular shape of the asymmetric sensing volume 114 shown in Fig. 2 is given as an example to clearly explain how the direction of motion can be extracted from the time series of the signal quality values and should not be considered as a limiting embodiment. In fact, a knowledge of the shape of the sensing volume is not strictly necessary, and, as long as a sufficient degree of asymmetry is present, two opposite direction of motions can be distinguished and, using for instance reference values obtained during controlled trials, the individual directions of motion can further be identified.

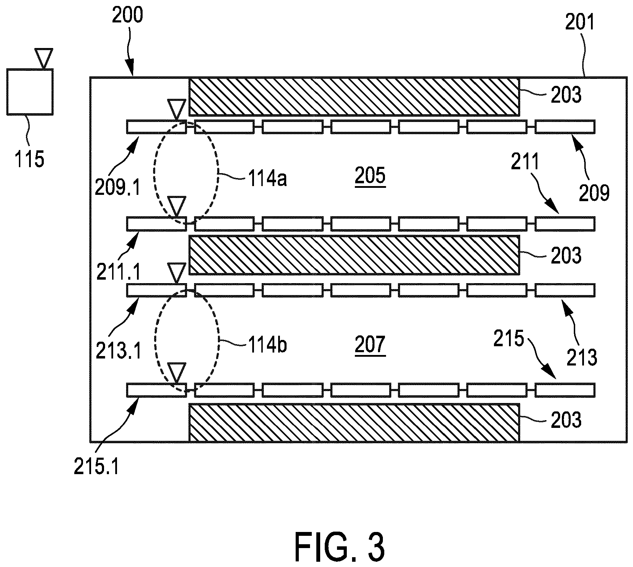

Fig. 3 shows a schematic block diagram of a motion determination arrangement 200 in accordance with another embodiment of the invention and implemented for use in a retail store 201, for instance for footfall analysis. Compared to applications in commercial offices, implementing RF sensing in retail stores faces several retail-specific problems: firstly, RF sensing in retail lighting, suffers from the sparse & non-uniform placement of the wireless radios across the store. Secondly, in many retail lighting installations, the wireless radios are located only at the very first luminaire of each trunk. This means that RF sensing can only be performed at one end of the aisle where the trunk starts (i.e. sensing takes place at the beginning of the aisle and not at the other end of the aisle). Hence, to analyze traffic flow through the aisle, there is a need to detect with a single RF sensing pair the direction of movement of the shopper.

The retail store 201 comprises a plurality of shelves 203 arranged in a parallel manner and defining aisles 205, 207 between them. The retail store has lighting trunks 209, 211, 213 and 215 running parallel to the aisles. The retail store 210 implements a wirelessly controllable lighting arrangement that use wireless communication for control of a subset of all lighting fixtures in the store, for instance for controlling the first lighting device 209.1, 211.1, 213.1 and 215.1 in each trunk light 209, 211, 213 and 215. The first lighting device then communicates via DALI wires the lighting control commands to the other sister-lights in its trunk. The different lights in the trunks are shown as boxes and the DALI wires as lines connecting the boxes. While this hybrid lighting control setup (wireless and wired) makes RF sensing in such retail stores more difficult due to the lack of RF sensing nodes, the few available wireless nodes within a store equipped with a hybrid-connectivity system can be advantageously located at the "bottle-neck" area of beginning and/or exit of an aisle. Despite of only being able to collect-motion sensing data from those bottle-neck areas (and without having sensing coverage elsewhere in the store), the motion determination arrangement can nevertheless provide valuable information, for instance for a retail traffic flow analysis system.

Thus, the processing unit 115 acts as a control unit for wirelessly controlling the operation of the lighting devices, for instance by sending on/off commands, or instructions to change the lighting parameters (color, intensity, temperature, etc.,) of the lighting devices in the trunks, in the form of radiofrequency communication signals. In the example, each of the first lighting devices 209.1, 211.1, 213.1 and 215.1 comprises a transceiver unit (not shown) and are part of a motion determination arrangement. The first lighting devices 209.1 and 211.1 form a first RF sensing pair that is configured to determine motion data within a first asymmetric sensing volume 114a, whereas the first lighting devices 213.1 and 215.1 form a second RF sensing pair that is configured to determine motion data within a second asymmetric sensing volume 114b. The asymmetry of the sensing volumes 114a and 114b can be caused by presence of the shelves 203 which absorb or reflect part of the radiated signal. Alternatively, or additionally, the asymmetry of the sensing volumes 114a and 114b can be achieved of further increase by a proper design of the antennas or suitable positioning of the transmitter unit and the receiver unit. Alternatively, only a subset of the available multipaths may purposefully be selected for the RF sensing (e.g. WiFi CSI based sensing) such that an asymmetric sensing volume is created. The time-series of the signal quality values of a respective RF sensing pair are used to distinguish the moving shopping cart from the associated human shopper. By merely analyzing the data from a single RF sensing pair at the beginning of the aisle, it is found that the human body mass of the shopper looks distinctly different from his shopping cart, in particular when the direction of the RF sensing signals is chosen to be perpendicular to the aisle direction and a directional RF beam is used. This setup allows the RF sensing to detect the shopping cart first and then only the human body mass which is predominantly made up from water. Based on this distinct detection sequence of cart & shopper, the direction of flow of the shopper can be distinguished, (i.e. was this shopper walking into the aisle vs leaving the aisle). This enables an easy determination of how many people with carts are entering/exiting the aisle. In addition, based on statistical analysis, the retailer can determine the predominant flow direction of the shoppers in this isle and for instance adjust his product placement on the left and right shelve, respectively.

Preferably, to maximize the RF sensing performance given the setup of a typical grocery or retail store 210, those wireless multipaths more influenced by the presence or absence of a shopping cart are selected for the sensing process, while minimizing the influences from other objects/people nearby. This can be done by purposefully selecting a directional antenna for the transmitter unit, e.g., a ZigBee radio or a WiFi radio or a WiFi+Thread dual radio.

**In** another example, not shown, when installing the lighting hardware in the retail store, a check board pattern is generated where, for instance, for the first trunk, the transceiver unit is on the near-end of the store (e.g., close to the cashier points), for the second trunk, the transceiver unit is on the opposite end of the store, for the third trunk, the transceiver unit is again on the near-end of the store, and so on. During commissioning the subsets of wireless multipaths between consecutive even or odd light trunks which are triggered by footfall in just one aisle are purposefully select.

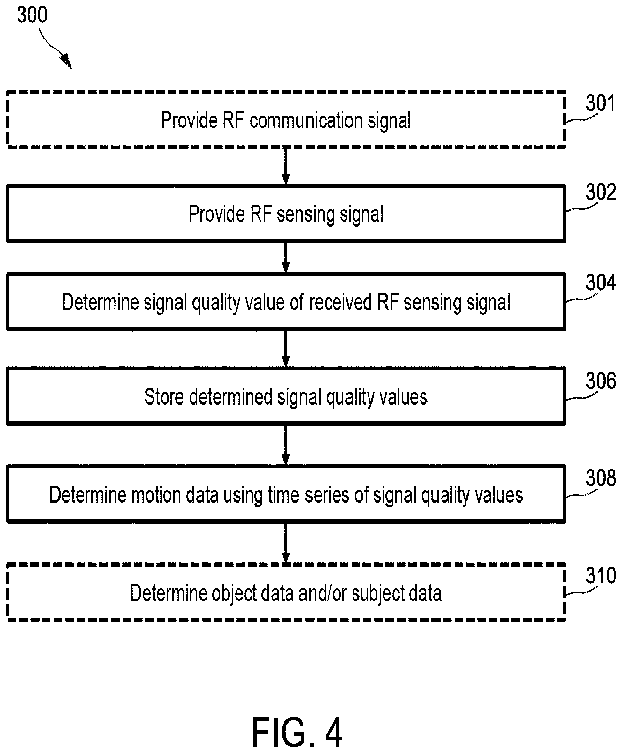

Fig. 4 shows a flow diagram of a method 300 for controlling operation of a motion determination arrangement for determining motion data indicative of a direction of motion of a direction of motion of a target ensemble of a subject and an object. The method optionally comprises, in a step 301, providing radiofrequency communication signals for controlling operation of the devices in the motion determination arrangement. The method comprises, in a step 302, providing a radiofrequency sensing signal. The method further comprises, in a step 304, determining a signal quality value of a signal parameter of the received radiofrequency sensing signal that is correlatable with a presence of an object and/or a subject within a sensing volume, such that a presence of the subject in the sensing volume results in a discernible signal quality value from that determined when the object is present in the sensing volume and from that determined when the target ensemble is present in the sensing volume. The method further comprises, in a step 306, storing the signal quality values determined during a time-span, and determining, in a step 308, the motion data using a time-series of the signal quality values. The method may further comprise, in a step 310, determining, using the signal quality values, subject data indicative of the subject within the sensing volume and/or object data indicative of the object, wherein the subject data and/or the object data enable a distinction between different subjects and/or objects.

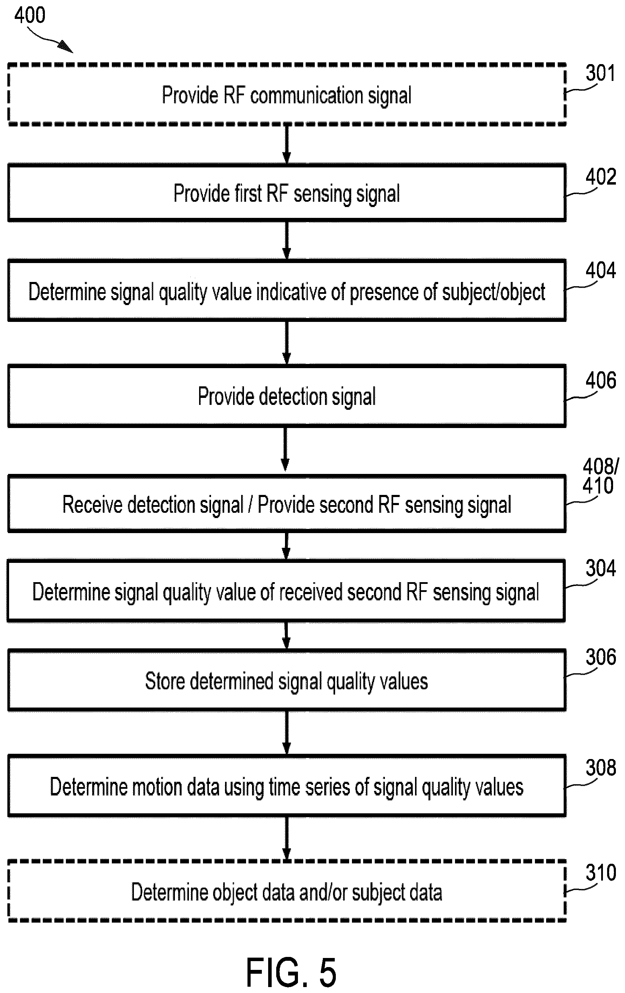

Fig. 5 shows a flow diagram of a method 400 for controlling operation of a motion determination arrangement for determining motion data indicative of a direction of motion of a direction of motion of a target ensemble of a subject and an object in accordance with another embodiment of the invention. In particular, the method 400 of Fig. 5 differs from the method 300 of Fig. 4, in that the method 400 comprises, in a step 402, providing first radiofrequency sensing signals according to a first wireless communication protocol. Upon determining, in a step 404, a signal quality value indicative of the presence of the subject and/or the object within the sensing volume, the method comprises, in a step 406, providing a detection signal indicative thereof. Further, upon reception, in a step 408, of the detection signal, the method includes, in a step 401, providing second radiofrequency sensing signals according to a second wireless communication protocol, wherein the second radiofrequency sensing signals provided in accordance with the second wireless communication protocol enable a higher correlation with the presence of the object and/or the subject than the first radiofrequency sensing signals provided in accordance with the first wireless communication protocol.

In summary, the invention is directed to an RF-sensing based motion determination arrangement for determining motion data indicative of a direction of motion of a subject and an object. It comprises a transmitter unit for providing RF-sensing signals, a receiver unit for receiving the RF-sensing signal, a signal quality determination unit configured to determine a signal quality value of a signal parameter of the received radiofrequency sensing signal that is correlatable with a presence of the object and/or the subject within a sensing volume, and a processing unit signally connected to the signal quality determination unit and configured to store the signal quality values determined during a time-span, and, using a time-series of the signal quality values, to determine the motion data thereby enabling a reduction of the complexity of systems for locating/tracking movable objects.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. Radiofrequency sensing based motion determination arrangement (100) for determining motion data (MD) indicative of a direction of motion (DM) of a target ensemble (102) of a subject (104) and an object (106), the motion determination arrangement comprising:
- at least one transmitter unit (108) configured to provide a radiofrequency sensing signal (SS);
- at least one receiver unit (110) configured to receive the radiofrequency sensing signal;
- a signal quality determination unit (112) configured to determine a signal quality value (V) of a signal parameter of the received radiofrequency sensing signal that is correlatable with a presence of the object and/or the subject within a sensing volume (114), such that a presence of the subject in the sensing volume results in a discernible signal quality value from that determined when the object is present in the sensing volume and from that determined when the target ensemble is present in the sensing volume; and
- a processing unit (115) connected to the signal quality determination unit and configured to store the signal quality values determined during a time-span, and, using a time-series of the signal quality values, to determine the motion data (MD) such that a first direction of motion is determined for a first time series of the signal quality value and a second direction of motion is determined for a second time series of the signal quality value.

2. The motion determination arrangement (100) of claim 1, wherein the transmitter unit (108) and the receiver unit (110) are integrated into a respective device (116, 118) of a wirelessly controllable lighting arrangement.

3. The motion determination arrangement (100) of claim 1 or 2, wherein the transmitter unit (108) is further configured to provide radiofrequency communication signals indicative of operation or status data pertaining to the motion determination arrangement (100).

4. The motion determination arrangement (100) of claim 3, wherein a current number of radiofrequency sensing signals (SS), and/or a current radio frequency of the radiofrequency sensing signals (SS) and/or a directionality of the of the radiofrequency sensing signals (SS) provided for determining the motion data (MD) depends on a current number, and/or radiofrequency and/or directionality of radiofrequency communication signals required for operating by the motion determination arrangement.

5. The motion determination arrangement (100) of claim 3, wherein the radiofrequency sensing signals and the radiofrequency communication signals are provided in compliance with a respective wireless communication protocol.

6. The motion determination arrangement (100) of any of the preceding claims, wherein the radiofrequency sensing signals (SS) are provided using a WiFi or BLE communication protocol.

7. The motion determination arrangement (100) of any of the preceding claims, wherein:
- the transmitter unit (108) is configured to provide first radiofrequency sensing signals (SS1) according to a first wireless communication protocol, wherein,
- the signal quality determination unit (112), upon determining a signal quality value (V) indicative of the presence of the subject and/or the object within the sensing volume, is further configured to provide to the transmitter unit a detection signal (DS) indicative thereof, and wherein,
- upon reception of the detection signal (DS), the transmitter unit (108) is configured to provide second radiofrequency sensing signals (SS2) according to a second wireless communication protocol, wherein the second radiofrequency sensing signals provided in accordance with the second wireless communication protocol enable a higher correlation with the presence of the object and/or the subject than the first radiofrequency sensing signals provided in accordance with the first wireless communication protocol.

8. The motion determination arrangement (100) of any of the preceding claims, wherein the processing unit (115) is configured, using the signal quality values (V), to determine subject data (SD) indicative of the subject within the sensing volume and/or object data (OD) indicative of the object, wherein the subject data and/or the object data enable a distinction between different subjects and/or objects.

9. The motion determination arrangement (100) of claim 8, wherein the radiofrequency sensing signal for determining the object data (OD) data is provided using a WiFi or BLE communication protocol radio with beam steering and/or angle of arrival detection and/or receive beamforming, and wherein, upon detection of an object in the sensing volume, the transmitter unit is configured to provide the radiofrequency sensing signals at a plurality of different transmissions direction to map a surface of the detected object.

10. Use of a motion determination arrangement (200) of any of the preceding claims in a building (201), for determining the motion data indicative of a direction of motion in an aisle (205, 207) of the building (201).

11. Method (300) for controlling operation of a motion determination arrangement (100, 200) for determining motion data indicative of a direction of motion of a direction of motion of a target ensemble of a subject and an object, the method comprising:
- providing (302) a radiofrequency sensing signal;
- determining (304) a signal quality value of a signal parameter of the received radiofrequency sensing signal that is correlatable with a presence of an object and/or a subject within a sensing volume, such that a presence of the subject in the sensing volume results in a discernible signal quality value from that determined when the object is present in the sensing volume and from that determined when the target ensemble is present in the sensing volume;
- storing (306) the signal quality values determined during a time-span, and;
- determining (308) the motion data using a time-series of the signal quality values such that a first direction of motion is determined for a first time series of the signal quality value and a second direction of motion is determined for a second time series of the signal quality value.

12. The method (300) of claim 11, further comprising: providing radiofrequency communication signals (301) indicative of operation or status data pertaining to the motion determination arrangement, wherein the radiofrequency sensing signals and the radiofrequency communication signals are provided in compliance with a respective wireless communication protocol.

13. The method (400) of claim 12 further comprising:
- providing (402) first radiofrequency sensing signals according to a first wireless communication protocol,
- upon determining (404) a signal quality value indicative of the presence of the subject and/or the object within the sensing volume, providing (406) a detection signal indicative thereof,
- upon reception (408) of the detection signal, providing (410) second radiofrequency sensing signals according to a second wireless communication protocol, wherein the second radiofrequency sensing signals provided in accordance with the second wireless communication protocol enable a higher correlation with the presence of the object and/or the subject than the first radiofrequency sensing signals provided in accordance with the first wireless communication protocol.

14. The method (300) of any of the preceding claims 11 to 13, further comprising:
- determining (310), using the signal quality values, subject data indicative of the subject within the sensing volume and/or object data indicative of the object, wherein the subject data and/or the object data enable a distinction between different subjects and/or objects.

15. Computer program comprising instructions, which, when executed by a controller of a motion determination arrangement, cause the motion determination arrangement to carry out the method of any of the claims 11 to 14.

## Patentansprüche

1. Bewegungsbestimmungsanordnung (100) auf Funkfrequenzabtastbasis zum Bestimmen von Bewegungsdaten (MD), die eine Bewegungsrichtung (DM) eines Zielensembles (102) eines Subjekts (104) und eines Objekts (106) anzeigen, die Bewegungsbestimmungsanordnung umfassend:
- mindestens eine Sendereinheit (108), die konfiguriert ist, um ein Funkfrequenzabtastsignal (SS) bereitzustellen;
- mindestens eine Empfängereinheit (110), die konfiguriert ist, um das Funkfrequenzabtastsignale zu empfangen;
- eine Signalqualitätsbestimmungseinheit (112), die konfiguriert ist, um einen Signalqualitätswert (V) eines Signalparameters des empfangenen Funkfrequenzabtastsignals zu bestimmen, der mit einem Vorhandensein des Objekts und/oder des Subjekts innerhalb eines Abtastvolumens (114) korrelierbar ist, sodass ein Vorhandensein des Subjekts in dem Abtastvolumen zu einem unterscheidbaren Signalqualitätswert von demjenigen führt, der bestimmt wird, wenn das Objekt in dem Abtastvolumen vorhanden ist, und von demjenigen, der bestimmt wird, wenn das Zielensemble in dem Abtastvolumen vorhanden ist; und
- eine Verarbeitungseinheit (115), die mit der Signalqualitätsbestimmungseinheit verbunden und konfiguriert ist, um die Signalqualitätswerte, die während einer Zeitspanne bestimmt werden, zu speichern und, unter Verwendung einer Zeitreihe der Signalqualitätswerte, um die Bewegungsdaten (MD) zu bestimmen, sodass eine erste Bewegungsrichtung für eine erste Zeitreihe des Signalqualitätswerts bestimmt wird und eine zweite Bewegungsrichtung für eine zweite Zeitreihe des Signalqualitätswerts bestimmt wird.

2. Bewegungsbestimmungsanordnung (100) nach Anspruch 1, wobei die Sendereinheit (108) und die Empfängereinheit (110) in eine jeweilige Vorrichtung (116, 118) einer drahtlos steuerbaren Beleuchtungsanordnung integriert sind.

3. Bewegungsbestimmungsanordnung (100) nach Anspruch 1 oder 2, wobei die Sendereinheit (108) ferner konfiguriert ist, um Funkfrequenzkommunikationssignale bereitzustellen, die Betriebs- oder Statusdaten bezüglich der Bewegungsbestimmungsanordnung (100) anzeigen.

4. Bewegungsbestimmungsanordnung (100) nach Anspruch 3, wobei eine aktuelle Anzahl von Funkfrequenzabtastsignalen (SS) und/oder eine aktuelle Funkfrequenz der Funkfrequenzabtastsignale (SS) und/oder eine Richtungsabhängigkeit der Funkfrequenzabtastsignale (SS), die zum Bestimmen der Bewegungsdaten (MD) bereitgestellt wird, von einer aktuellen Anzahl und/oder Funkfrequenz und/oder Richtungsabhängigkeit von Funkfrequenzkommunikationssignalen abhängt, die für ein Betreiben durch die Bewegungsbestimmungsanordnung erforderlich ist.

5. Bewegungsbestimmungsanordnung (100) nach Anspruch 3, wobei die Funkfrequenzabtastsignale und die Funkfrequenzkommunikationssignale unter Einhaltung eines jeweiligen drahtlosen Kommunikationsprotokolls bereitgestellt werden.

6. Bewegungsbestimmungsanordnung (100) nach einem der vorstehenden Ansprüche, wobei die Funkfrequenzabtastsignale (SS) unter Verwendung eines WiFi- oder BLE-Kommunikationsprotokolls bereitgestellt werden.

7. Bewegungsbestimmungsanordnung (100) nach einem der vorstehenden Ansprüche, wobei:
- die Sendereinheit (108) konfiguriert ist, um erste Funkfrequenzabtastsignale (SS1) gemäß einem ersten drahtlosen Kommunikationsprotokoll bereitzustellen, wobei,
- die Signalqualitätsbestimmungseinheit (112), bei dem Bestimmen eines Signalqualitätswerts (V), der das Vorhandensein des Subjekts und/oder des Objekts innerhalb des Abtastvolumens anzeigt, ferner konfiguriert ist, um der Sendereinheit ein Erfassungssignal (DS), das dies anzeigt, bereitzustellen, und wobei,
- bei einem Empfang des Erfassungssignals (DS), die Sendereinheit (108) konfiguriert ist, um zweite Funkfrequenzabtastsignale (SS2) gemäß einem zweiten drahtlosen Kommunikationsprotokoll bereitzustellen, wobei die zweiten Funkfrequenzabtastsignale, die gemäß dem zweiten drahtlosen Kommunikationsprotokoll bereitgestellt werden, eine höhere Korrelation mit dem Vorhandensein des Objekts und/oder des Subjekts als die ersten Funkfrequenzabtastsignale, die gemäß dem ersten drahtlosen Kommunikationsprotokoll bereitgestellt werden, ermöglichen.

8. Bewegungsbestimmungsanordnung (100) nach einem der vorstehenden Ansprüche, wobei die Verarbeitungseinheit (115) konfiguriert ist, um, unter Verwendung der Signalqualitätswerte (V), Subjektdaten (SD), die das Subjekt innerhalb des Abtastvolumens anzeigen, und/oder Objektdaten (OD), die das Objekt anzeigen, zu bestimmen, wobei die Subjektdaten und/oder die Objektdaten eine Abgrenzung zwischen verschiedenen Subjekten und/oder Objekten ermöglichen.

9. Bewegungsbestimmungsanordnung (100) nach Anspruch 8, wobei das Funkfrequenzabtastsignal zum Bestimmen der Objektdaten (OD) unter Verwendung eines WiFi- oder BLE-Kommunikationsprotokollfunkgeräts mit Strahllenkung und/oder Ankunftswinkelerfassung und/oder Empfangsstrahlformung bereitgestellt wird, und wobei, bei einer Erfassung eines Objekts in dem Abtastvolumen, die Sendereinheit konfiguriert ist, um die Funkfrequenzabtastsignale in einer Vielzahl von verschiedenen Übertragungsrichtungen bereitzustellen, um eine Oberfläche des erfassten Objekts abzubilden.

10. Verwendung einer Bewegungsbestimmungsanordnung (200) nach einem der vorstehenden Ansprüche in einem Gebäude (201) zum Bestimmen der Bewegungsdaten, die eine Bewegungsrichtung in einem Gang (205, 207) des Gebäudes (201) anzeigen.

11. Verfahren (300) zum Steuern eines Betriebs einer Bewegungsbestimmungsanordnung (100, 200) zum Bestimmen von Bewegungsdaten, die eine Bewegungsrichtung eines Zielensembles eines Subjekts und eines Objekts anzeigen, das Verfahren umfassend:
- Bereitstellen (302) eines Funkfrequenzabtastsignals;
- Bestimmen (304) eines Signalqualitätswerts eines Signalparameters des empfangenen Funkfrequenzabtastsignals, der mit einem Vorhandensein eines Objekts und/oder eines Subjekts innerhalb eines Abtastvolumens korrelierbar ist, sodass ein Vorhandensein des Subjekts in dem Abtastvolumen zu einem unterscheidbaren Signalqualitätswert von demjenigen führt, der bestimmt wird, wenn das Objekt in dem Abtastvolumen vorhanden ist, und von demjenigen, der bestimmt wird, wenn das Zielensemble in dem Abtastvolumen vorhanden ist;
- Speichern (306) der Signalqualitätswerte, die während einer Zeitspanne bestimmt werden, und;
- Bestimmen (308) der Bewegungsdaten unter Verwendung einer Zeitreihe der Signalqualitätswerte, sodass eine erste Bewegungsrichtung für eine erste Zeitreihe des Signalqualitätswerts bestimmt wird und eine zweite Bewegungsrichtung für eine zweite Zeitreihe des Signalqualitätswerts bestimmt wird.

12. Verfahren (300) nach Anspruch 11, ferner umfassend: Bereitstellen von Funkfrequenzkommunikationssignalen (301), die Betriebs- oder Statusdaten bezüglich der Bewegungsbestimmungsanordnung anzeigen, wobei die Funkfrequenzabtastsignale und die Funkfrequenzkommunikationssignale unter Einhaltung eines jeweiligen drahtlosen Kommunikationsprotokolls bereitgestellt werden.

13. Verfahren (400) nach Anspruch 12, ferner umfassend:
- Bereitstellen (402) erster Funkfrequenzabtastsignale gemäß einem ersten drahtlosen Kommunikationsprotokoll,
- nach dem Bestimmen (404) eines Signalqualitätswerts, der das Vorhandensein des Subjekts und/oder des Objekts innerhalb des Abtastvolumens anzeigt, Bereitstellen (406) eines Erfassungssignals, das dies anzeigt,
- bei dem Empfang (408) des Erfassungssignals, Bereitstellen (410) von zweiten Funkfrequenzabtastsignalen gemäß einem zweiten drahtlosen Kommunikationsprotokoll, wobei die zweiten Funkfrequenzabtastsignale, die gemäß dem zweiten drahtlosen Kommunikationsprotokoll bereitgestellt werden, eine höhere Korrelation mit dem Vorhandensein des Objekts und/oder des Subjekts als die ersten Funkfrequenzabtastsignale, die gemäß dem ersten drahtlosen Kommunikationsprotokoll bereitgestellt werden, ermöglichen.

14. Verfahren (300) nach einem der vorstehenden Ansprüche 11 bis 13, ferner umfassend:
- Bestimmen (310), unter Verwendung der Signalqualitätswerte, von Subjektdaten, die das Subjekt innerhalb des Abtastvolumens anzeigen, und/oder Objektdaten, die das Objekt anzeigen, wobei die Subjektdaten und/oder die Objektdaten eine Abgrenzung zwischen verschiedenen Subjekten und/oder Objekten ermöglichen.

15. Computerprogramm, umfassend Anweisungen, die, wenn sie durch eine Steuerung einer Bewegungsbestimmungsanordnung ausgeführt werden, die Bewegungsbestimmungsanordnung veranlassen, das Verfahren nach einem der Ansprüche 11 bis 14 durchzuführen.

## Revendications

1. Agencement de détermination de mouvement (100) basé sur un captage de radiofréquence permettant de déterminer des données de mouvement (MD) indiquant une direction de mouvement (DM) d'un ensemble cible (102) d'un sujet (104) et d'un objet (106), l'agencement de détermination de mouvement comprenant :
- au moins une unité de transmission (108) configurée pour fournir un signal de captage de radiofréquence (SS) ;
- au moins une unité de réception (110) configurée pour recevoir le signal de captage de radiofréquence ;
- une unité de détermination de qualité de signal (112) configurée pour déterminer une valeur de qualité de signal (V) d'un paramètre de signal du signal de captage de radiofréquence reçu qui peut être corrélée à une présence de l'objet et/ou du sujet au sein d'un volume de captage (114), de telle sorte qu'une présence du sujet dans le volume de captage résulte en une valeur de qualité de signal discernable de celle déterminée lorsque l'objet est présent dans le volume de captage et de celle déterminée lorsque l'ensemble cible est présent dans le volume de captage ; et
- une unité de traitement (115) connectée à l'unité de détermination de qualité de signal et configurée pour stocker les valeurs de qualité de signal déterminées pendant un laps de temps, et, à l'aide d'une série chronologique des valeurs de qualité de signal, pour déterminer les données de mouvement (MD) de telle sorte qu'une première direction de mouvement est déterminée pour une première série chronologique de la valeur de qualité de signal et une seconde direction de mouvement est déterminée pour une seconde série chronologique de la valeur de qualité de signal.

2. Agencement de détermination de mouvement (100) selon la revendication 1, dans lequel l'unité de transmission (108) et l'unité de réception (110) sont intégrées dans un dispositif (116, 118) respectif d'un agencement d'éclairage commandable sans fil.

3. Agencement de détermination de mouvement (100) selon la revendication 1 ou 2, dans lequel l'unité de transmission (108) est configurée en outre pour fournir des signaux de communication radiofréquence indiquant des données de fonctionnement ou d'état se rapportant à l'agencement de détermination de mouvement (100).

4. Agencement de détermination de mouvement (100) selon la revendication 3, dans lequel un nombre actuel de signaux de captage de radiofréquence (SS), et/ou une fréquence radio actuelle des signaux de captage de radiofréquence (SS) et/ou une directionnalité des signaux de captage de radiofréquence (SS) fournis pour la détermination des données de mouvement (MD) dépendent d'un nombre, et/ou d'une radiofréquence et/ou d'une directionnalité, actuels, de signaux de communication radiofréquence requis pour un fonctionnement par l'agencement de détermination de mouvement.

5. Agencement de détermination de mouvement (100) selon la revendication 3, dans lequel les signaux de captage de radiofréquence et les signaux de communication radiofréquence sont fournis en conformité avec un protocole de communication sans fil respectif.

6. Agencement de détermination de mouvement (100) selon l'une quelconque des revendications précédentes, dans lequel les signaux de captage de radiofréquence (SS) sont fournis à l'aide d'un protocole de communication WiFi ou BLE.

7. Agencement de détermination de mouvement (100) selon l'une quelconque des revendications précédentes, dans lequel :
- l'unité de transmission (108) est configurée pour fournir des premiers signaux de captage de radiofréquence (SS1) selon un premier protocole de communication sans fil, dans lequel,
- l'unité de détermination de qualité de signal (112), lors de la détermination d'une valeur de qualité de signal (V) indiquant la présence du sujet et/ou de l'objet au sein du volume de captage, est configurée en outre pour fournir à l'unité de transmission un signal de détection (DS) indiquant celle-ci, et dans lequel,
- à la réception du signal de détection (DS), l'unité de transmission (108) est configurée pour fournir des seconds signaux de captage de radiofréquence (SS2) selon un second protocole de communication sans fil, dans lequel les seconds signaux de captage de radiofréquence fournis conformément au second protocole de communication sans fil permettent une corrélation plus élevée avec la présence de l'objet et/ou du sujet que les premiers signaux de captage de radiofréquence fournis conformément au premier protocole de communication sans fil.

8. Agencement de détermination de mouvement (100) selon l'une quelconque des revendications précédentes, dans lequel l'unité de traitement (115) est configurée, à l'aide des valeurs de qualité de signal (V), pour déterminer des données de sujet (SD) indiquant le sujet au sein du volume de captage et/ou des données d'objet (OD) indiquant l'objet, dans lequel les données de sujet et/ou les données d'objet permettent une distinction entre différents sujets et/ou objets.

9. Agencement de détermination de mouvement (100) selon la revendication 8, dans lequel le signal de captage de radiofréquence permettant de déterminer les données d'objet (OD) est fourni à l'aide d'une radio à protocole de communication WiFi ou BLE avec orientation de faisceau et/ou détection d'angle d'arrivée et/ou formation de faisceau de réception, et dans lequel, lors d'une détection d'un objet dans le volume de captage, l'unité de transmission est configurée pour fournir les signaux de captage de radiofréquence selon une pluralité de directions de transmission différentes pour cartographier une surface de l'objet détecté.

10. Utilisation d'un agencement de détermination de mouvement (200) selon l'une quelconque des revendications précédentes dans un bâtiment (201), pour la détermination des données de mouvement indiquant une direction de mouvement dans une allée (205, 207) du bâtiment (201).

11. Procédé (300) permettant de commander le fonctionnement d'un agencement de détermination de mouvement (100, 200) pour la détermination de données de mouvement indiquant une direction de mouvement d'une direction de mouvement d'un ensemble cible d'un sujet et d'un objet, le procédé comprenant :
- la fourniture (302) d'un signal de captage de radiofréquence ;
- la détermination (304) d'une valeur de qualité de signal d'un paramètre de signal du signal de captage de radiofréquence reçu qui peut être corrélée à une présence d'un objet et/ou d'un sujet au sein d'un volume de captage, de telle sorte qu'une présence du sujet dans le volume de captage résulte en une valeur de qualité de signal discernable de celle déterminée lorsque l'objet est présent dans le volume de captage et de celle déterminée lorsque l'ensemble cible est présent dans le volume de captage ;
- le stockage (306) des valeurs de qualité de signal déterminées pendant un laps de temps, et ;
- la détermination (308) des données de mouvement à l'aide d'une série chronologique des valeurs de qualité de signal de telle sorte qu'une première direction de mouvement est déterminée pour une première série chronologique de la valeur de qualité de signal et une seconde direction de mouvement est déterminée pour une seconde série chronologique de la valeur de qualité de signal.

12. Procédé (300) selon la revendication 11, comprenant en outre : la fourniture de signaux de communication radiofréquence (301) indiquant des données de fonctionnement ou d'état se rapportant à l'agencement de détermination de mouvement, dans lequel les signaux de captage de radiofréquence et les signaux de communication radiofréquence sont fournis en conformité avec un protocole de communication sans fil respectif.

13. Procédé (400) selon la revendication 12 comprenant en outre :
- la fourniture (402) de premiers signaux de captage de radiofréquence selon un premier protocole de communication sans fil,
- lors de la détermination (404) d'une valeur de qualité de signal indiquant la présence du sujet et/ou de l'objet au sein du volume de captage, la fourniture (406) d'un signal de détection indiquant celle-ci,
- à la réception (408) du signal de détection, la fourniture (410) de seconds signaux de captage de radiofréquence selon un second protocole de communication sans fil, dans lequel les seconds signaux de captage de radiofréquence fournis conformément au second protocole de communication sans fil permettent une corrélation plus élevée à la présence de l'objet et/ou du sujet que les premiers signaux de captage de radiofréquence fournis conformément au premier protocole de communication sans fil.

14. Procédé (300) selon l'une quelconque des revendications précédentes 11 à 13, comprenant en outre :
- la détermination (310), à l'aide des valeurs de qualité de signal, de données de sujet indiquant le sujet au sein du volume de captage et/ou de données d'objet indiquant l'objet, dans lequel les données de sujet et/ou les données d'objet permettent une distinction entre différents sujets et/ou objets.

15. Programme informatique comprenant des instructions, qui, lorsqu'elles sont exécutées par un organe de commande d'un agencement de détermination de mouvement, amènent l'agencement de détermination de mouvement à effectuer le procédé selon l'une quelconque des revendications 11 à 14.
